# EUROPÄISCHE PATENTSCHRIFT

(11) **EP 1 329 383 B1**
(45) Veröffentlichungstag und Bekanntmachung des Hinweises auf die Patenterteilung: **31.05.2006**
(21) Anmeldenummer: 02001521.0
(22) Anmeldetag: 22.01.2002
(51) Int. Cl.: B65B 3/32, B65D 77/08, A23P 1/08, A23C 19/09

(54) **Löffelfertiges Lebensmittel für Säuglinge und Kleinkinder und Verfahren zu seiner Herstellung**
Ready-to-eat food for infants and small children and method for its preparation
Produit alimentaire prêt à consommer pour des nourrissons et des enfants et procédé pour sa préparation

(43) Veröffentlichungstag der Anmeldung: 23.07.2003
(73) Patentinhaber: SOCIETE DES PRODUITS NESTLE S.A., 1800 Vevey (CH)
(72) Erfinder: Santana, Ruben, 84576 Teising (DE); Zahner, Peter, 84489 Burghausen (DE); Reinl, Hubert, 84577 Tüssling (DE)
(74) Vertreter: Andrae, Steffen

(56) Entgegenhaltungen:
- EP-A- 0 769 252
- EP-A- 0 928 560
- WO-A-02/00029
- WO-A-98/47390
- DE-U- 20 107 374
- FR-A- 1 414 386
- NL-C- 1 015 261
- US-A1- 2001 041 202

## Beschreibung

Die vorliegende Erfindung betrifft ein löffelfertiges Lebensmittel für die Ernährung von Säuglingen und Kleinkindern, das in Fertigpackungen in den Handel gebracht wird und eine Mehrkomponentenmahlzeit mit brei- und/oder gelartiger Struktur ist.

DE 20107344 U beschreibt ein essbares Produkt bestehend aus eine Joghurtmasse und einem Fruchtanteil, welche unterschiedliche Zonen eines Behältnisses einrahmen, wobei die Fruchtmasse entlang der wandung angeordnet ist.

Für die Ernährung von Säuglingen und Kleinkindern werden seit langem breiartige Fertigmahlzeiten angeboten, die in fertig verpackter Form als ohne Kühlung lagerfähige Produkte (Shelf Stable Products) hergestellt und in den Handel gebracht werden, und zwar insbesondere in Form der bekannten Gläschen mit Babynahrung.

In diesen herkömmlichen Gläschen befinden sich üblicherweise Fertiggerichte aus verschiedenen Zutaten in pürierter Form, die direkt bzw. nach einem vorherigen Aufwärmen im Wasserbad verzehrt werden können. Babynahrung in Gläschen wird in zahlreichen Varianten auf der Basis unterschiedlicher Rezepturen und aus unterschiedlich kombinierten Ausgangsmaterialien angeboten. Zahlreiche der angebotenen Gerichte sinddabei zwar kombinierte Mahlzeiten, beispielsweise solche, in denen Fleisch- und Gemüsebestandteile kombiniert sind. Da die Fertiggerichte jedoch normalerweise als einheitliche Breimahlzeit angeboten werden, sind die relativen Mengen der einzelnen Bestandteile von vornherein vorgegeben, und es kann nur ein Gesamtgeschmack wahrgenommen werden, ohne dass das Kind die Möglichkeit hat, den Geschmack der einzelnen Bestandteile getrennt zu erleben. Auch die Mutter hat beim Füttern des Kindes nur wenig Möglichkeiten, die geschmacklichen Vorlieben des gefütterten Kindes deutlich zu erkennen, sie einzelnen Bestandteilen einer Mahlzeit zuzuordnen und diese Vorlieben zu berücksichtigen.

Produkte, bei denen zwei unterschiedliche Komponenten übereinandergeschichtet sind, lassen sich mangels einer direkten Erreichbarkeit der unteren Komponente ebenfalls nicht oder nur in sehr begrenztem Maße in unvermischter Form auf den Löffel nehmen. Sie werden daher in der Regel nacheinander oder nach dem Umrühren als einheitlicher Brei verzehrt.

Die einheitliche Breistruktur der herkömmlichen Babynahrung ermöglicht zwar die Schaffung unterschiedlicher Gerichte mit verschiedenen Grundfarben, die durch die Nahrungsbestandteile vorgegeben sind, vermag es jedoch ansonsten nur in beschränkten Umfange, aus dem Füttern einen Vorgang zu machen, der den gefütterten Säugling oder das gefütterte Kleinkind auch optisch interessieren kann. Für schichtartig abgefüllte Produkte gilt Ähnliches.

Die einheitliche Breistruktur der meisten herkömmlichen Babynahrungsprodukte setzt außerdem gewisse Grenzen für die in der breiartigen Mahlzeit kombinierbaren Bestandteile, da sich bestimmte Nahrungsmittel bei ihrer intensiven Vermischung geschmacklich, oder was die Haltbarkeit der erhaltenen Mischung angeht, negativ beeinflussen können.

Es ist Aufgabe der vorliegenden Erfindung, ein löffelfertiges Lebensmittel in Fertigpackungen für die Ernährung von Säuglingen und Kleinkindern in Form einer Mehrkomponentenmahlzeit mit brei- oder gelartiger Struktur zu schaffen, bei dem die einzelnen Komponenten der Mahlzeit auf neuartiger Weise kombiniert werden können, so dass beim Füttern geschmackliche Vorlieben stärker berücksichtigt werden können, und die Einnahme einer Mahlzeit zu einem den gefütterten Säugling oder das gefütterte Kleinkind auch optisch interessierenden Vorgang gemacht werden kann.

Weitere durch die vorliegende Erfindung lösbare Aufgaben ergeben sich aus der nachfolgenden Beschreibung, insbesondere aus den beschriebenen Vorteilen des neuartigen erfindungsgemäßen Lebensmittels.

Die hier genannte Hauptaufgabe wird bei einem löffelfertigen Lebensmittel der genannten Art, das wenigstens zwei Komponenten aufweist, die visuell voneinander unterscheidbar sind, unvermischt sind und wenigstens zwei unterschiedliche Teilvolumina des Füllinhalts einer Verpackungsbehälters einnehmen, dadurch gelöst, dass die Grenzflächen zwischen den wenigstens zwei Teilvolumina im wesentlichen vertikal verlaufende, vorzugsweise gekrümmte, Grenzflächen sind, die auf der Produktoberfläche als Umriss- oder Grenzlinien linien sichtbar sind.

Vorzugsweise ist wenigstens eine der Komponenten im wesentlichen zentral angeordnet und im wesentlichen ringartig von wenigstens einer der anderen Komponenten umgeben, und zwar wenigstens in einem sich bis an die Oberfläche des Füllinhalts erstreckenden Volumenbereich des Füllinhalts.

Im der nachfolgenden Beschreibung wird die Erfindung anhand einer derzeit bevorzugten Ausführungsform näher beschrieben, bei der eines der Teilvolumina "im wesentlichen zentral" angeordnet ist und "ringförmig" von der anderen Komponente umgeben ist. Die im wesentlichen vertikalen Grenzflächen zwischen den wenigstens zwei Teilvolumina umschreiben in einem solchen Fall einen Körper von z.B. Zylinderform allseitig. Die allgemeinere Definition der Erfindung soll aber auch solche Ausführungsformen erfassen, bei denen die Teilvolumina beider Komponenten auch teilweise durch einen Kontakt mit der Behälterwand begrenzt sein können, d.h. die Grenzflächen zwischen den beiden Komponenten keine der Komponenten vollständig umschreiben. Die Begriffe "zentral" und "ringförmig" sind bei der bevorzugt beschriebenen Ausführungsform ferner nicht in ihrer exakten mathematisch-geometrischen Bedeutung zu verstehen, sondern sind so zu verstehen, dass "im wesentlichen zentral" auch eine exzentrische Anordnung beschreibt, und ringförmig auch Ringe mit variierenden Ringbreiten, z.B. mit einer exzentrischen Ringöffnung, und mit unregelmäßig geformten Innenringen, wie sie erhalten werden, wenn die zentrale Komponente eine Umriss aufweist, der z.B. den Charakter einer bildlichen Darstellung aufweist, z.B. als Umriss eines Tiers erscheint. Die allgemeinere Definition der Erfindung ist daher die der Grenzflächen als vertikale Grenzflächen. Die nachfolgende Beschreibung einer derzeit bevorzugten Ausführungsform soll keine Einschränkung des Schutzbereichs auf die geschilderte Ausführungsform bewirken. Es erscheint jedoch ausreichend, wenn die Erfindung nachfolgend ausschließlich anhand einer ausgewählten bevorzugten Ausführungsform näher erläutert wird. Andere räumliche vertikale Anordnungen der beiden Komponenten erschließen sich dem Fachmann auch ohne zusätzliche detaillierte Beschreibungen.

Üblicherweise enthält ein erfindungsgemäßes Nahrungsmittel nur zwei visuell unterscheidbare Komponenten. Eine der Komponenten nimmt ein Teilvolumen des Füllinhalts in zentraler Position ein, und zwar so, dass es sich von der sichtbaren Oberfläche der Mehrkomponentenmahlzeit in die Masse der anderen Komponenten hinein oder durch diese vollständig hindurch bis zum Boden des Verpackungsbehälters erstreckt.

Der auf der Oberfläche der Mehrkomponentenmahlzeit sichtbare Querschnitt der das zentrale Teilvolumen einnehmenden Komponente weist eine klare Umrissform auf und ist beispielsweise kreisförmig, herzförmig, dreieckig, vieleckig, sternförmig oder elliptisch oder kann auch einfache gegenständliche Motive wie Halbmonde, Autos, Blüten oder Tiere, z.B. Fische, Bären, Hunde, und ähnliches andeuten. Eine klare Form mit glatten Konturen ist im Sinne einer besseren Aufnahme nur einer Komponente auf einen Löffel in der Regel bevorzugt. Kompliziertere Umrisse, z.B. Sterne oder Blüten, sind dann bevorzugt, wenn die Optik im Vordergrund steht.

Das erfindungsgemäße löffelfertige Lebensmittel kann sowohl eine herzhafte, salzige Mahlzeit sein, deren Bestandteile Gemüse- und/oder Fleisch- oder Fischzubereitungen sind, oder eine süße Mahlzeit, bei der Milchprodukte oder Milch enthaltende Produkte wie Quark, Yoghurt, Frischkäse, Pudding oder Milchreisbestandteile mit Fruchtzubereitungen kombiniert sind, beispielsweise Fruchtkompott oder Fruchtmus aus Einzelfrüchten oder Früchtekombinationen. Die einzelnen Komponenten können auch in geschäumter Form vorliegen.

Um die beiden Komponenten einer Mahlzeit klar zu unterscheiden, so dass auch das gefütterte Kind sehen kann, mit welchem Teil der Mahlzeit es gefüttert wird, und dadurch einen bestimmten Geschmack einer der Komponenten zuordnen kann, sowie um eine interessante optische Struktur zu schaffen, unterscheiden sich die Komponenten visuell und zwar beispielsweise aufgrund ihrer Farben und/oder Helligkeit und/oder Transparenz und/oder Textur voneinander. Es wird dabei darauf geachtet, möglichst attraktive ansprechende Farbkombinationen zu erhalten. Dabei müssen sich die beiden Nahrungsmittelkomponenten jedoch nicht unbedingt durch unterschiedliche Farben unterscheiden, sondern sie können sich auch durch ihre Farbtiefe bzw. Helligkeit unterscheiden, oder sie können eine erkenn- und fühlbar unterschiedliche Textur aufweisen. Es ist auch möglich, dass eine der Komponenten opak ist, während die andere Komponente transparenter ist, z.B. eine eher gelartige Struktur (Geleestruktur) aufweist.

Es ist bevorzugt, dass das erfindungsgemäße Lebensmittel in einer Verpackung angeboten wird, die das attraktive Erscheinungsbild des Inhalts entweder direkt erkennen läßt, oder als Bild auf der Verpackung trägt oder bildlich wenigstens darauf verweist. Wenn das Lebensmittel in einer Verpackung vertrieben wird, die üblicherweise aus einem becher- oder schüsselartigen Unterteil, vorzugsweise mit einer Höhe von etwa 50 mm der weniger, mit einem Deckel oder einer Deckelfolie besteht, können durchsichtige Kunststoffmaterialien für die Herstellung des Bechers und/oder des Deckels verwendet werden, die erkennen lassen, in welcher räumlichen Form die beiden Komponenten vorliegen, und die ggf. auch erkennen lassen, dass eine der Komponenten als zentraler Kern durch das ganze Nahrungsmittel hindurch verläuft. Anstelle von Kunststoffbehältern können auch Glasbehälter verwendet werden.

Es ist jedoch auch möglich, das erfindungsgemäße Lebensmittel in ganz oder teilweise undurchsichtigen Verpackungen, insbesondere Kunststoffverpackungen, anzubieten und das Aussehen der sichtbaren Oberfläche des Nahrungsmittels auf dem Deckel darzustellen oder durch eine ansprechende, andeutende bildliche Gestaltung darauf zu verweisen.

Da die beiden Nahrungsmittelkomponenten bei dem erfindungsgemäßen Lebensmittel nicht durch Trennwände voneinander getrennt sind, ist es zur Beibehaltung der gewünschten Trennung der einzelnen Komponenten und der Klarheit der optischen Struktur erforderlich, dass beide Komponenten ausreichende Viskositäten aufweisen, die ein Ineinanderfließen der beiden Komponenten auch bei einer nachgeschalteten thermischen Sterilisierung verhindern. Sollten die miteinander kombinierten Nahrungsmittel nicht von Haus aus die erforderlichen Viskositätseigenschaften aufweisen, können ihnen viskositätserhöhende Bestandteile zugesetzt werden, beispielsweise Verdickungsmittel oder Mittel, die zu einem mehr oder weniger ausgeprägten Gelieren eines oder beider Bestandteile führen. Insbesondere können die Verdickungsmittel und/oder Geliermittel solche sein, die während des Füllvorgangs und im Anschluß daran die Ausbildung einer festeren Konsistenz der Bestandteile herbeiführen.

Vorzugsweise werden als Verdickungsmittel und/oder Geliermittel geeignete native und/oder modifizierte Stärken verwendet, oder einem oder beiden Bestandteilen werden zusätzlich geeignete Hydrokolloide, insbesondere Pflanzengummen, wie Johannisbrotkernmehl, Guarmehl, Pektine, Carregeene und ähnliche bekannte strukturbildende Substanzen zugesetzt, soweit ihre Verwendung in Nahrungsmitteln für Säuglinge und Kinder unbedenklich ist.

Eine Erhöhung der Viskosität und Formbeständigkeit ist bei zahlreichen Komponenten auch durch ein Aufschäumen erreichbar.

Die erfindungsgemäßen Mehrkomponentennahrungsmittel können die verschiedenartigsten geeigneten Einzelkomponenten miteinander kombinieren. Nachfolgend werden einige Beispiele genannt, wobei es sich versteht, dass die Aufzählung in keiner Weise erschöpfend ist oder sein kann.

Bei süßen Nahrungsmittelkombinationen lassen sich in vorteilhafter Weise Zubereitungen, die Milchanteile enthalten, wie Milchreiszubereitungen und Puddingmassen oder Zubereitungen aus Quark, Yoghurt, Frischkäse einer geeigneten Konsistenz mit Fruchtkomponenten kombinieren, die Fruchtkompotte darstellen können oder Fruchtmus. Bestandteile, die normalerweise relativ dünnflüssig vorliegen würden, werden dabei vorzugsweise durch erforderliche Anteile an Gelbildnern in eine löffelfeste Form überführt und können Geleecharakter aufweisen. Eine Erhöhung der Viskosität und Formbeständigkeit zahlreicher Komponenten ist auch durch Aufschäumen erreichbar.

Herzhafte oder salzige Nahrungsmittel können ebenfalls in den vielfältigsten Kombinationen hergestellt werden. Dabei werden vorzugsweise Fleisch- oder Fischzubereitungen mit Gemüsezubereitungen kombiniert. Beispielsweise können Zubereitungen aus Geflügelfleisch, z.B. Hühnchenfleisch oder Putenfleisch, mit Gemüsezubereitungen wie Spinatzubereitungen, Kartoffelbrei oder Tomatencreme kombiniert werden. Es können auch Reisgerichten verwendet werden, beispielsweise Tomatenreiskomponenten, oder Nahrungsmittelbestandteile aus geeigneten Teigwaren oder Maisbrei. Auch Fischbestandteile, beispielsweise lachscremeartige Nahrungsmittelbestandteile, lassen sich vorteilhaft kombinieren.

Beim Verfüttern der Mahlzeit kann die Mutter unterschiedliche Mengen der einzelnen Komponenten mit dem Löffel aufnehmen und das Kind die unterschiedlichen Geschmackskomponenten kosten lassen und dabei die jeweiligen Bestandteile erklären. Das Abgraben einzelnen Bestandteile mit dem Löffel kann dabei für das gefütterte Kleinkind auch die Aufmerksamkeit binden und von anderen störenden Einflüssen ablenken.

Erfindungsgemäße Lebensmittel können grundsätzlich unter Anwendung von Techniken hergestellt werden, wie sie zur Herstellung von Kombinationslebensmitteln auf anderer Nahrungsmittelgrundlage und/oder für andere Verbraucherkreise und Zwecke existieren. Grundsätzlich werden bei der Herstellung des erfindungsgemäßen Nahrungsmittels, wenn dieses aus zwei Komponenten besteht, zwei pastöse und/oder gelierfähige Nahrungsmittelmassen in fließ- oder pumpförmiger Form getrennt voneinander bereitet und so bereitgestellt, dass sie mit geeigneten Zuführeinrichtungen einer Abfüllapparatur zugeführt werden können. Die beiden Nahrungsmittelkomponenten werden so in den vorgesehenen Verpackungsbehälter eingefüllt, der üblicherweise die Form eines Bechers, einer Tasse oder einer Schüssel aufweist, dass eine der Komponenten zentral in dem Behälter angeordnet ist und die andere Komponente die zentrale Komponente wenigstens im Bereich der sichtbaren Oberfläche des Füllinhalts des Verpackungsbehälters ringartig umgibt. "Ringartig" soll dabei nicht nur für glatte kreisförmige Ringformen stehen, sondern auch Ringe mit unregelmäßigen inneren Ringformen, wie sie bei z.B. herz- oder sternförmigen Kernvolumina erhalten werden, beschreiben.

Nach dem Befüllen des Behälters wird dieser mit einem Deckel oder einer gesiegelten Deckelfolie verschlossen.

Die erforderliche Haltbarkeit wird wie bei anderen bekannten Nahrungsmitteln für Säuglinge und Kleinkinder entweder dadurch erreicht, dass die beiden einzufüllenden Nahrungsmittelkomponenten von vornherein zur Sterilisierung erhitzt wurden, z.B. unter typischen UHT-Bedingungen (10s, 150°C), und anschließend unter aseptischen Bedingungen abgefüllt wurden, oder dadurch, dass man das fertige abgefüllte Lebensmittel im verpackten Zustand einer sogenannten "In-Pack-Sterilisierung" unterzieht, bei der das Produkt unter üblichen Bedingungen (121°C, 50 min) in der geschlossenen Verpackung sterilisiert wird. Die Haltbarkeit kann durch Zusatz geeigneter, vorzugsweise natürlicher Antioxidantien gegebenenfalls weiter verbessert werden.

Als Material für die Verpackung werden vorzugsweise an sich bekannte hochwertige Kunststoffe für Lebensmittelverpackungen mit den gewünschten Sperrschichteigenschaften (Sauerstoff- und Feuchtigkeitsausschluss) und optischen Eigenschaften verwendet.

Das Befüllen kann grundsätzlich auf zweierlei Art erfolgen:

Wenn das Befüllen in einem einzigen Füllschritt erfolgt, werden konzentrisch angeordnete Düsen einer Extrusionsvorrichtung verwendet, und der Verpackungsbehälter wird dadurch mit zwei voneinander durch eine ausgeprägte Grenzfläche getrennte Nahrungsmittelkomponenten befüllt, dass ihm die beiden Komponenten mit einer geeigneten Mindestviskosität zugeführt werden und dass während des Füllvorgangs der Behälter und die Zuführeinrichtung in Füllrichtung relativ zueinander bewegt werden, d.h. dass entweder die Düsen der Zuführeinrichtungen abgesenkt und angehoben werden und/oder dass die zu füllenden Behälter entsprechend bewegt werden.

Gemäß einer anderen Ausführungsform wird das erfindungsgemäße Nahrungsmittel dadurch eingefüllt, dass man den Verpackungsbehälter zuerst mit einer der Komponenten in fließfähigem Zustand vorbeschickt und die zweite Komponente anschließend so zugibt, dass die erste Komponente aus demjenigen Teilvolumen des Behälterinhalts verdrängt wird, die von der zweiten Komponente eingenommen werden soll.

Das kann dadurch erfolgt, dass man eine rohrförmige Extrusionsdüse mit dem gewünschten Querschnitt in die erste Komponente hinein absenkt und danach unter Injizieren der zweiten Nahrungsmittelkomponente in die Masse der ersten Komponente zurückzieht, so dass die gewünschten unterschiedlichen abgegrenzten Teilvolumina gebildet werden. Üblicherweise wird auf diese Weise der zentrale Abschnitt gebildet. Es ist grundsätzlich jedoch auch denkbar, in einem solchen Schritt auch einen äußeren Ring mittels einer entsprechenden Ringdüse einzubringen, wobei die zuerst vorgelegte Komponente ins Zentrum des Füllinhalts der Verpackung verdrängt wird.

Es ist ferner vorgesehen, insbesondere in Fällen, in denen eine Nahrungsmittelkomponente in geringeren relativen Mengen verwendet wird, diese dadurch einzubringen, dass sie unter ausreichendem Druck ins Zentrum der zuerst vorgelegten Komponente eingespritzt wird, ohne dass die Injektionsdüse bis zum Boden der Verpackung abgesenkt wird, so dass kein bis zum Boden der Verpackung reichender zentraler Abschnitt gebildet wird. Wenn der Extrusionsdruck der als zweite eingebrachten Komponente ausreichend groß gewählt wird, kann es ausreichen, die Düse auf die Oberfläche der ersten Komponente aufzusetzen. Durch das Einspritzen der zweiten Komponente in die erste wird diese zur Seite und um die aufgesetzte Düse nach oben verdrängt und bildet beim Zurückzieen der Düse bzw. beim Absenken der Verpackung den gewünschten Ring.

Wenn man eine der Komponenten vorlegt, ist selbstverständlich beim Befüllen des Behälters die im nächsten Schritt hinzuzufügende Menge der zweiten Komponenten zu berücksichtigen, indem man nur soviel der ersten Komponeten vorlegt, dass beim Einspritzen der folgenden Komponenten ins Zentrum der ersten Komponente der Füllstand im Behälter auf die gewünschte endgültige Füllhöhe steigt. Vorzugsweise ist die Füllhöhe so, dass der Kopfraum in dem gefüllten Behälter etwa 5% oder mehr beträgt.

Die relativen Volumenanteile der beiden Komponenten im fertigen Produkt werden typischerweise so gewählt, dass die zentrale Komponente etwa 30 bis 40% des Gesamtinhalts ausmacht. Sie kann, z.B. rezepturbedingt, aber auch nur in Mengen bis zu 15 % vorliegen. Ihre Menge ist jedoch in jedem Falle so hoch, dass die zentrale Komponente deutlich in die Masse der anderen Komponeten hineinreicht und nicht nur eine Oberflächendekoration darstellt.

Sowohl aus hygienischen Gründen, als auch unter Gesichtspunkten der gewünschten Strukturausbildung werden die beiden Komponenten gemäss einer Ausführungsform des Herstellungsverfahrens in erhitzter Form abgefüllt. Übliche Abfülltemperaturen liegen im Bereich von 70 bis 95°C, und insbesondere über etwa 75°C. Nach dem Abfüllen der beiden Komponenten wird der Behälter verschlossen und einer thermischen "In-Pack"-Sterilisierung (121°C, 50 min) unterzogen. Anschlie-βend läßt man das Produkt auf Raumtemperatur kommen.

Die Nahrungsmittelkomponenten sind dabei vorzugsweise so zusammengesetzt, dass beim Abkühlen die erforderliche Viskosität ausgebildet wird oder wenigstens beibehalten wird. Es ist ferner wichtig, dass die beim Abfüllen erzeugte räumliche Struktur bei den in der Regel erforderlichen thermischen Sterilisierungsschritten nicht wieder zerstört wird. Es war überraschend, als festgestellt wurde, dass man verschiedene Komponenten von Lebensmitteln für Säuglinge und Kleinkindern nicht nur unter Ausbildung einer räumlichen Struktur der beschriebenen Art abfüllen kann, sondern dass die erzeugte räumliche Struktur tatsächlich auch nach einer thermischen "In-Pack-Sterilisierung" erhalten bleibt.

In den Figuren werden Beispiele für Ausführungsformen der erfindungsgemäßen Lebensmittel gezeigt.

Es zeigen
- Figur 1: die Ansicht eines Lebensmittelprodukts in perspektivischer Darstellung von oben;
- Figur 2: ein Lebensmittelprodukt gemäß Figur 1 von unten;
- Figur 3: ein Lebensmittelprodukt mit einer Schauseite gemäß Figur 1 von unten, wobei im Vergleich mit Figur 2 zu erkennen ist, dass der zentrale Kern nicht bis zum Boden der Verpackung reicht.
- Figur 4: eine Ansicht entsprechend Figur 1 einer der möglichen Variationen, wobei der kreisförmige zentrale Bereich durch einen herzförmigen ersetzt ist.

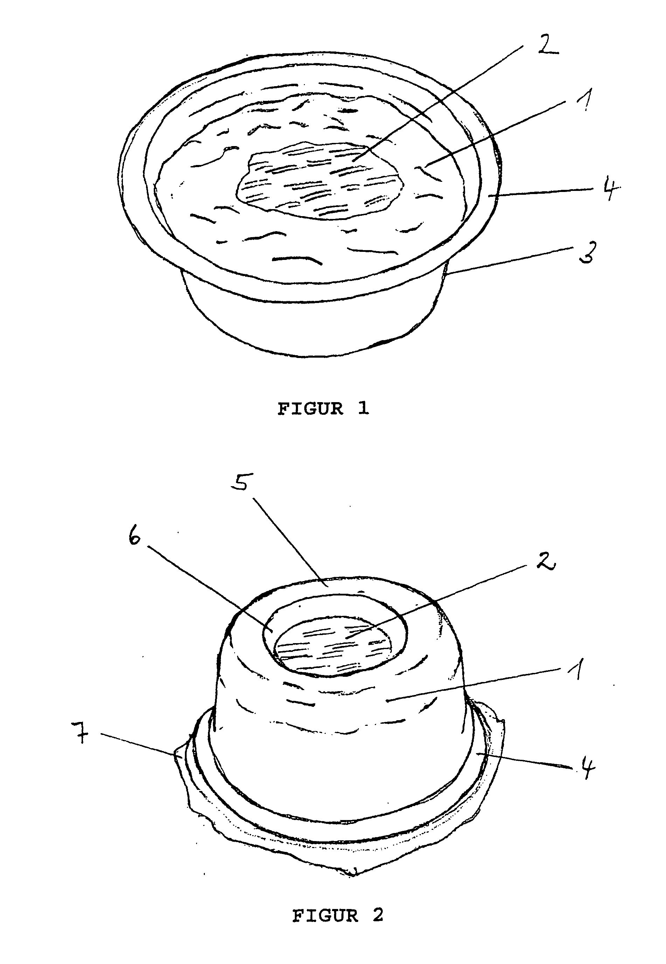

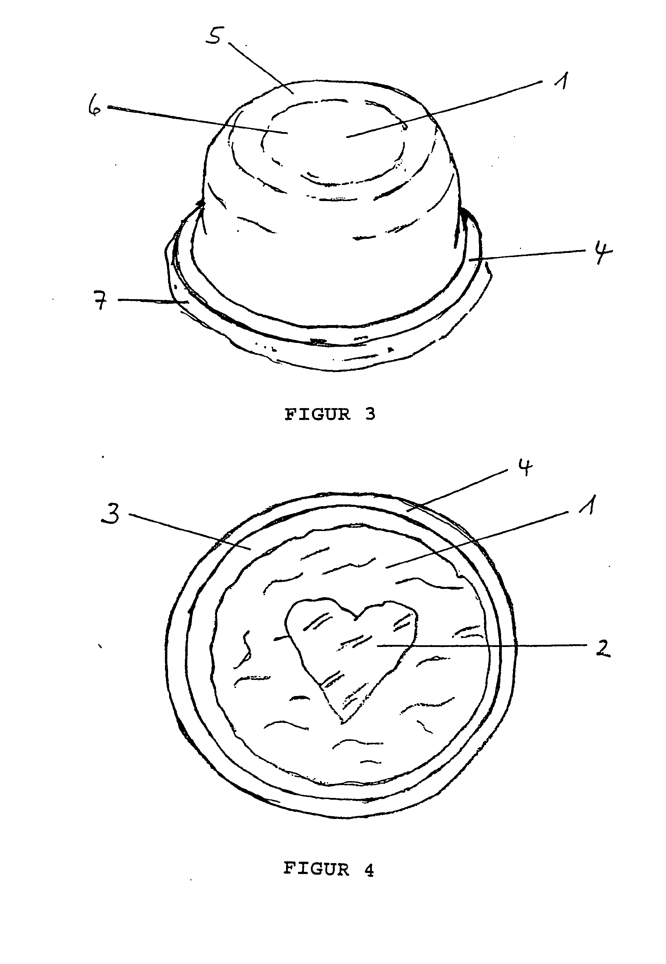

Figur 1 zeigt die Schauseite einer Ausführungsform eines erfindungsgemäßen Lebensmittels mit einer ersten Komponente 1 und einer zentralen zweiten Komponente 2 in einem Behälter 3, wie man sie bei geöffnetem Deckel oder durch einen transparenten Deckel hindurch wahrnimmt. Der dargestellte Behälter 3 hat Becherform und eine Tiefe von ca. 5 cm und ist mit einem flanschartigen Rand 4 versehen, der mit einer Verschlussfolie versiegelt werden kann. Der Querschnitt des von der zweiten Komponente 2 eingenommenen zentralen Bereichs ist hierbei etwa kreisfömig, d.h. der zentrale Bereich ist in etwa zylindrisch. Wie in Figur 2 gezeigt ist, kann sich dieser Bereich 2 bis zum Boden der Verpackung erstrecken und z.B. durch den Boden des transparenten Behälters 3 auch von unten zu sehen sein. Der Boden 5 des dargestellten Behälters 3 hat hierbei eine ringförmige Standfläche und einen abgesenkten Zentralabschnitt 6. Er steht auf einer schematisch gezeigten Verschlussfolie 7. Wie in Figur 3 gezeigt ist, kann sich der Zentralbereich mit der zweiten Komponente aber auch nur insel- oder pfropfenartig in die andere Komponente 1 hinein erstrecken, so dass durch den Boden 5, 6 des Behälters 3 nur die Komponente 1 zu erkennen ist.

Der zentrale Bereich 2 kann verschiedene für Kinder attraktive Umrisse aufweisen. In Figur 4, die eine Aufsicht auf einen im wesentlichen Figur 1 entsprechenden gefüllten Behälter 3 zeigt, ist als Beispiel ein herzförmiger Umriss des zentralen Bereichs mit der zweiten Komponente 2 gezeigt.

## Patentansprüche

1. Verfahren zur Herstellung einer ohne Kühlung lagerfähigen ("shelf stable") löffelfertigen Säuglings- und Kleinkindernahrung in Fertigpackungen in Form einer Mehrkomponentenmahlzeit mit brei- oder gelartiger Struktur, die wenigstens zwei Komponenten aufweist, die visuell voneinander unterscheidbar sind, unvermischt sind und wenigstens zwei unterschiedliche Teilvolumina des Füllinhalts eines Verpakkungsbehälters einnehmen, wobei die Grenzflächen zwischen den wenigstens zwei Teilvolumina im wesentlichen vertikal verlaufende Grenzflächen sind, die auf der Produktoberfläche als Umrisslinien oder Grenzlinien sichtbar sind, **dadurch gekennzeichnet, dass** es die Schritte umfaßt
- Bereitstellung einer ersten pastösen und/oder gelierfähigen Nahrungsmittelkomponente in fließ- oder pumpfähiger Form in Verbindung mit einer ersten Zuführeinrichtung,
- Bereitstellung einer zweiten pastösen und/oder gelierfähigen Nahrungsmittelkomponente in fließ- oder pumpfähiger Form in Verbindung mit einer zweiten Zuführeinrichtung,
- Bereitstellung eines becherartigen Verpackungsbehälters,
- Befüllen des becherartigen Verpackungsbehälters mit der ersten und zweiten Nahrungsmittelkomponente auf eine solche Weise, dass die zweite Komponente zentral in dem Verpackungsbehälter angeordnet ist und die erste Komponente die zweite Komponente wenigstens im Bereich der sichtbaren Oberfläche des Füllinhalts des becherartigen Verpackungsbehälters ringartig umgibt, wobei die erste und/oder zweite Komponente mit einer Temperatur im Bereich von 70 bis 95°C zugeführt werden,
- Verschließen des Verpackungsbehälters mit einem Deckel und thermische Sterilisierung des Inhalts der Verpackung durch In-Pack-Sterilisierung.

2. Verfahren nach Anspruch 1, **dadurch gekennzeichnet, dass** die Zuführtemperatur der ersten und/oder zweiten Komponente im Bereich von 75°C bis 95°C liegt und wenigstens eine der Komponenten beim Abkühlen auf Raumtemperatur eine festere Konsistenz ausbildet.

3. Verfahren nach Anspruch 1 oder 2, **dadurch gekennzeichnet, dass** die erste und die zweite Komponente gleichzeitig unter Verwendung von Zuführeinrichtungen mit konzentrisch angeordneten Düsenöffnungen in den Verpackungsbehälter eingefüllt werden, wobei der Verpackungsbehälter und die Zuführeinrichtungen während des Füllvorgangs in Füllrichtung relativ zueinander bewegt werden.

4. Verfahren nach Anspruch 1 oder 2, **dadurch gekennzeichnet, dass** in einem ersten Schritt der Verpackungsbehälter mit der ersten Komponente teilweise befüllt und die zweite Komponenten anschließend aus einer Zuführeinrichtung mittels einer zentralen Austrittsdüse unter Verdrängung der ersten Komponente aus dem Zentrum des Verpackungsbehälters in die erste Komponente injiziert wird.

5. Verfahren nach einem der Ansprüche 1 bis 4, **dadurch gekennzeichnet, dass** die beiden Komponenten vor dem Abfüllen durch eine UHT-Behandlung thermisch sterilisiert werden und das Abfüllen unter aseptischen Bedingungen erfolgt.

6. Ohne Kühlung lagerfähige ("shelf stable") löffelfertige Säuglings- und Kleinkindernahrung in einer Verpackung mit einem becherartigen Unterteil aus Glas oder einem durchsichtigen Kunststoff in Form einer Mehrkomponentenmahlzeit mit brei- oder gelartiger Struktur, **dadurch gekennzeichnet, dass** sie nach einem Verfahren gemäß den Ansprüchen 1 bis 5 hergestellt wurde, dass die Mehrkomponentenmahlzeit mit brei- oder gelartiger Struktur im Behälter sterilisiert vorliegt und wenigstens eine ihrer Komponenten im wesentlichen zentral angeordnet ist und im wesentlichen ringartig von wenigstens einer ihrer anderen Komponenten umgeben ist.

7. Säuglings- und Kleinkindernahrung nach Anspruch 6, **dadurch gekennzeichnet, dass** sie aus zwei visuell unterscheidbaren Komponenten besteht.

8. Säuglings- und Kleinkindernahrung nach Anspruch 6 oder 7, **dadurch** gekenntzeichnet, dass die als zentrales Teilvolumen angeordnete Komponente sich von der sichtbaren Oberfläche der Mehrkomponentenmahlzeit in die Masse der anderen Komponente hinein oder durch diese hindurch bis zum Boden des Verpackungsbehälters erstreckt.

9. Säugling- und Kleinkindernahrung nach einem der Ansprüche 6 bis 8, **dadurch gekennzeichnet, dass** der sichtbare Querschnitt des im wesentlichen zentralen Teilvolumens kreisförmig, sternförmig, herzförmig, dreieckig, vieleckig oder elliptisch ist oder den Umriss eines Gegenstands, einer Pflanze oder eines Tiers zeigt.

10. Säuglings- und Kleinkindernahrung nach einem der Ansprüche 6 bis 9, **dadurch gekennzeichnet, dass** die Mahlzeit eine herzhafte Mahlzeit aus Gemüse- und/oder Fleisch- oder Fischzubereitungen ist oder eine süße Mahlzeit aus Milchprodukte und/oder stärkehaltige Produkte enthaltenden Zubereitungen und/oder Fruchtzubereitungen ist.

11. Säuglings- und Kleinkindernahrung nach einem der Ansprüche 6 bis 10, **dadurch gekennzeichnet, dass** sich die visuell unterscheidbaren Komponenten aufgrund ihrer Farbe und/oder Helligkeit und/oder Transparenz und/oder Textur voneinander unterscheiden.

12. Säuglings- und Kleinkindernahrung nach einem der Ansprüche 6 bis 11, **dadurch gekennzeichnet, dass** die Verpakkung aus einem becherartigen Unterteil mit einem Deckel oder einer Deckelfolie besteht, wobei das becherartige Unterteil und/oder der Deckel aus dem durchsichtigen Kunststoff oder Glas hergestellt ist/sind.

13. Säuglings- und Kleinkindernahrung nach einem der Ansprüche 6 bis 12, **dadurch gekennzeichnet, dass** sie sich in einer Verpackung aus einem Becher mit einem Deckel oder einer Deckelfolie befindet, wobei der Deckel undurchsichtig ist und eine Darstellung der sichtbaren Oberfläche des Füllinhalts des Bechers oder eine darauf verweisende graphische Gestaltung aufweist.

14. Säuglings- und Kleinkindernahrung nach einem der Ansprüche 6 bis 13, **dadurch gekennzeichnet, dass** eine oder beide der Komponenten viskositätserhöhende Zusätze enthalten und/oder in geschäumter Form vorliegen.

15. Säuglings- und Kleinkindernahrung nach einem der Ansprüche 6 bis 14, **dadurch gekennzeichnet, dass** eine oder beide der Komponenten als viskositätserhöhende Zusätze Verdickungsmittel und/oder Geliermittel aufweisen.

16. Säuglings- und Kleinkindernahrung nach Anspruch 15, **dadurch gekennzeichnet, dass** sie als Verdickungsmittel und/oder Geliermittel native und/oder modifizierte Stärken und/oder Gummen aufweist.

17. Säuglings- und Kleinkindernahrung nach einem der Ansprüche 6 bis 16, **dadurch gekennzeichnet, dass** sie aus Kombinationen zweier unterschiedlich gefärbter Komponenten besteht, die ausgewählt sind aus Milchreiszubereitungen/-Fruchtkompott, Quarkzubereitungen/Fruchtmus, Geflügelfleischzubereitungen/Polentacreme, Geflügelfleischzubereitungen/Tomaten-Teigwarenzubereitungen, Geflügelfleischzubereitungen/Spinatzubereitungen, Geflügelfleischzubereitungen/Tomatenreiszubereitungen; Rindfleischzubereitungen/-Tomatencreme; Rindfleischzubereitungen/Kartoffelbrei; Lachszubereitungen/Spinatzubereitungen.

## Claims

1. A method for producing a ready-to-eat pre-packaged baby or infant food in the form of a multi-component meal of a pasty or congealable consistency, which can be stored without refrigeration (which is "shelf-stable") and which is comprised of at least two components that can be visually distinguished, are unmixed and occupy at least two different volume segments of the contents of a product container, the interfaces between the at least two different volume segments being in the form of essentially vertically extending interfaces that are visible at the product top surface as contours or boundary lines, which comprises the steps of
- providing a first pasty and/or congealable food component in free-flowing of dispensable form in association with a first dispensing system,
- providing a second pasty and/or congealable food component in free-flowing of dispensable form in association with a second dispensing system,
- providing a cup-like product container,
- filling the cup-like product container with the first and the second food components in a manner such that the second component is placed in the product container in a central position and the first component is placed in the product container to surround the second component in a ring-like fashion at least in the region of the visible top surface of the contents of the cup-like product container, wherein said first and/or second components are dispensed with a temperature in a range of from 70°C to 95°C, and
- sealing the product container with a lid and thermally sterilizing the contents of the packaging by in-pack sterilization.

2. Method of claim 1, **characterized in that** the feeding temperature of the first and/or second components are in the range of from 75°C to 95°C, and at least one component develops a firmer consistency upon cooling to room temperature.

3. Method of claim 1 or claim 2, characterizd in that the first and second components are simultaneously filled into the product container by dispensing systems equipped with concentric nozzle openings, during which filling process the product container and the dispensing systems are moved relative to each other.

4. The method of claim 1 or 2, **characterized in that**, in a first step, the product container is partly filled with the first component and the second component is subsequently injected into the first component from a dispensing system that utilizes a centered nozzle, thus displacing the first component from the center of the product container.

5. The method of any of claims 1 to 4, **characterized in that** the two components are thermally sterilized by a Ultra High Temperature process prior to being filled into the product container and that the filling of the product container takes place under aseptic conditions.

6. Ready-to-eat baby or infant food which can be stored without refrigeration (which is "shelf stable") in a packaging having a cup-like lower part made from glass or a transparent plastics material and which is in the form of a multi-component meal of a pasty or congealable consistency, **characterized in that** it has been produced according to a method according to claims 1 to 5, that the multi-component meal of pasty or congealable consistency is present in in-pack sterilized form and at least one of the components is positioned in an essentially central location and is surrounded in essentially annular fashion by at least one of the other components.

7. The baby or infant food of claim 6, **characterized in that** it consists of two visually distinguishable components.

8. The baby or infant food of claim 6 or 7, **characterized in that** the component forming a central volume segment extends from a visible top surface of the multicomponent meal into the other component or through it down to the bottom surface of the product container.

9. The baby or infant food of any of claims 6 to 8, **characterized in that** the visible cross-section of the centrally located volume segment has a circular, starshaped, heart-shaped, triangular, polygonal or elliptical shape or depicst the contour of an article or a plant or an animal.

10. The baby or infant food of any of claims 6 to 9, **characterized** that the meal is a savory meal from a vegetable and/or meat or fish preparation or is a sweet meal from preparations including milk-based and/or starch-based products and/or a fruit preparation.

11. The baby or infant food of any of claims 6 to 10, **characterized in that** the visually distinguishable components differ from one another by their color and/or tonal brightness and/or transparency and/or texture.

12. The baby or infant food of any of claims 6 to 11, **characterized in that** the packaging constsis of a cup-shaped lower part and a lid or a cover foil, where the cup-shaped lower part and/or the lid are made of a transparent plastic material or glass.

13. The baby or infant food of any of claims 6 to 12, **characterized in that** it is present in a packagng of a cup with a lid or cover foil, said lid being opaque and being provided with an image of the top surface of the multi-component meal in the cup or with a suitably indicative graphic ilustration of the meal.

14. The baby or infant food of any of claims 6 to 13, **characterized in that** one or both of the components contain viscosity-enhancing additives and/or are present in a foamy condition.

15. The baby or infant food of any of claims 6 to 14, **characterized in that** one or both of the components contain viscosity-enhancing additives in the form of thickeners and/or gelling agents.

16. The baby or infant food of claim 15, **characterized in that** the thickening or gelling agents contained therein are native and/or modified starches and/or gums.

17. The baby or infant food of any of claims 6 to 16, **characterized in that** it consists of combinations of two differently colored components selected from rice pudding preparations/stewed fruit, cottage cheese preparations/puréed fruit, poultry meat preparations/creamy corn, poultry meat preparations/tomato-pasta preparations, poultry meat preparations/spinach preparations, poultry meat preparations/tomato-rice preparations; beef preparations/tomato paste; beef preparations/mashed potatoes; and salmon preparations/spinach preparations.

## Revendications

1. Procédé de préparation d'un aliment pour nourrissons et enfants en bas-âge, prêt à la consommation, pouvant être conservé sans refroidissement (« shelf stable »), dans des emballages sous forme d'un repas à plusieurs composants avec structure de type bouillie ou gel, qui présente au moins deux composants, qui sont visuellement distinguables l'un de l'autre, sont non mélangés et occupent au moins deux volumes partiels différents du contenu d'un récipient d'emballage, où les surfaces limites entre les au moins deux volumes partiels sont des surfaces limite se développant essentiellement verticalement, qui sont visibles à la surface du produit, comme des lignes de contour ou des lignes limites,
**caractérisées en ce qu'**il comprend les étapes de :
- préparation d'un premier composant alimentaire pâteux et/ou pouvant gélifier sous forme fluide ou pompable, en association avec un premier dispositif d'apport,
- préparation d'un deuxième composant alimentaire pâteux et/ou pouvant gélifier, sous forme fluide ou pompable, en association avec un deuxième dispositif d'apport,
- préparation d'un récipient d'emballage de type verre,
- remplissage du récipient d'emballage de type verre avec les premier et deuxième composants alimentaires de telle sorte que le deuxième composant est disposé de manière centrale dans le récipient d'emballage et le premier composant entoure comme un anneau, le deuxième composant, au moins au niveau de la surface visible du contenu du récipient d'emballage de type verre, où le premier et/ou deuxième composant sont introduits avec une température située dans l'intervalle allant de 70 à 95°C,
- Fermeture du récipient d'emballage avec un couvercle et stérilisation thermique du contenu de l'emballage par une stérilisation in-pack.

2. Procédé suivant la revendication 1, **caractérisé en ce que** la température d'introduction des premier et/ou deuxième composants se situent dans l'intervalle allant de 75 à 95°C et qu'au moins un des composants forme lors du refroidissement à température ambiante, une consistance plus solide.

3. Procédé suivant la revendication 1 ou 2, **caractérisé en ce que** le premier et le deuxième composants sont introduits dans le récipient d'emballage simultanément, en utilisant des dispositifs d'introduction avec ouverture de buse disposés de manière concentrique, où le récipient d'emballage et les dispositifs d'introduction sont déplacés l'un par rapport à l'autre pendant le processus de remplissage, en direction du remplissage.

4. Procédé suivant la revendication 1 ou 2, **caractérisé en ce que** dans une première étape, le récipient d'emballage est partiellement rempli du premier composant et le deuxième composant est ensuite injecté dans le premier composant, à partir d'un dispositif d'introduction, à l'aide d'une buse centrale, en repoussant le premier composant, depuis le centre du récipient d'emballage.

5. Procédé suivant une des revendications 1 à 4, **caractérisé en ce que** les deux composants sont thermiquement stérilisés par un traitement UHT avant le remplissage et que le remplissage est réalisé dans des conditions aseptiques.

6. Aliment pour nourrissons et enfants en bas-âge prêt à la consommation, pouvant être stocké sans refroidissement (« shelf stable »), dans un emballage avec une partie inférieure en verre ou une matière plastique transparente, sous forme d'un repas à plusieurs composants avec structure de type bouillie ou gel, **caractérisé en ce qu'**il est préparé selon un procédé suivant les revendications 1 à 5, **en ce que** le repas à plusieurs composants avec structure de type bouillie ou gel est présent sous forme stérilisée dans le récipient et qu'au moins un de ces composants est disposé de manière essentiellement centrale et est entouré essentiellement à la manière d'un anneau, par au moins un de ses autres composants.

7. Aliment pour nourrissons et enfants en bas-âge suivant la revendication 6, **caractérisé en ce qu'**il consiste en deux composants visuellement distinguables.

8. Aliment pour nourrissons et enfants en bas-âge suivant la revendication 6 ou 7, **caractérisé en ce que** le composant disposé comme volume partiel central s'étend depuis la surface visible du repas à plusieurs composants, dans la masse de l'autre composant ou au-travers de celui-ci jusqu'au fond du récipient d'emballage.

9. Aliment pour nourrissons et enfants en bas-âge suivant une des revendications 6 à 8, **caractérisé en ce que** la coupe transversale visible du volume partiel essentiellement central est de forme circulaire, en forme d'étoile, en forme de coeur, triangulaire, polygonale ou elliptique ou **en ce que** le contour représente un objet, une plante ou un animal.

10. Aliment pour nourrissons et enfants en bas-âge suivant une des revendications 6 à 9, **caractérisé en ce que** le repas est un repas épicé à base de préparation de légumes et/ou de viande ou de poisson ou un repas sucré d'un produit laitier et/ou d'une préparation contenant des produits amidonnés et/ou d'une préparation à base de fruits.

11. Aliment pour nourrissons et/ou enfants en bas-âge suivant une des revendications 6 à 10, **caractérisé en ce que** les composants sont visuellement distinguables sur base de leur couleur et/ou clarté et/ou transparence et/ou texture.

12. Aliment pour nourrissons et enfants en bas-âge suivant une des revendications 6 à 11, **caractérisé en ce que** l'emballage consiste en une partie inférieure de type verre avec un couvercle ou une feuille de couverture, où la partie inférieure de type verre et/ou le couvercle est préparé à partir d'une matière plastique transparente ou de verre.

13. Aliment pour nourrissons et enfants en bas-âge suivant une des revendications 6 à 12, **caractérisé en ce qu'**il se trouve dans un emballage d'un verre avec un couvercle ou une feuille de couverture, où le couvercle est non-transparent et présente une représentation de la surface visible du contenu du verre ou un dessin graphique renvoyant à celui-ci.

14. Aliment pour nourrissons et enfants en bas-âge suivant une des revendications 6 à 13, **caractérisé en ce qu'**un ou les deux composants contiennent des additifs augmentant la viscosité et/ou se présente sous forme moussée.

15. Aliment pour nourrissons et enfants en bas-âge suivant une des revendications 6 à 14, **caractérisé en ce qu'**un ou les deux composants présentent comme additif augmentant la viscosité, un agent épaississant et/ou un agent gélifiant.

16. Aliment pour nourrissons et enfants en bas-âge suivant la revendication 15, **caractérisé en ce qu'**il présente comme agent épaississant et/ou agent gélifiant, des amidons et/ou gommes natifs et/ou modifiés.

17. Aliment pour nourrissons et enfants en bas-âge suivant une des revendications 6 à 16, **caractérisé en qu'**il consiste en des combinaisons de deux composants de couleur différente, qui sont choisis parmi les compositions de riz au lait/compote de fruits, préparation de fromage blanc/mousse de fruits, préparation de viande de volaille/crème polenta, préparation de viande de volaille/préparation de tomates/pâtes alimentaires, préparation de viande de volaille/préparation d'épinards, préparation de viande de volaille/préparation de riz aux tomates ; préparation de viande de boeuf/crème de tomates ; préparation de viande de boeuf/bouillie de carottes ; préparation de saumon/préparation d'épinards.
